# EUROPÄISCHE PATENTSCHRIFT

(11) **EP 1 927 257 B1**
(45) Veröffentlichungstag und Bekanntmachung des Hinweises auf die Patenterteilung: **01.09.2010**
(21) Anmeldenummer: 06793378.8
(22) Anmeldetag: 08.09.2006
(51) Int. Cl.: H04W 4/06

(54) **VERFAHREN UND ANORDNUNG ZUM BETREIBEN MEHRERER GRUPPENDIENSTE IN EINEM KOMMUNIKATIONSNETZ**
METHOD AND DEVICE FOR OPERATING MULTIPLE GROUP SERVICES IN A COMMUNICATIONS NETWORK
PROCEDE ET DISPOSITIF POUR FAIRE FONCTIONNER PLUSIEURS SERVICES DE GROUPE DANS UN RESEAU DE COMMUNICATION

(30) Priorität: 13.09.2005 DE 102005044857
(43) Veröffentlichungstag der Anmeldung: 04.06.2008
(73) Patentinhaber: Nokia Siemens Networks GmbH & Co. KG, 81541 München (DE)
(72) Erfinder: HERZOG, Christian, 13187 Berlin (DE); LÜDE, Thomas, 12169 Berlin (DE)
(86) Internationale Anmeldenummer: PCT/EP2006/066196
(87) Internationale Veröffentlichungsnummer: WO 2007/031474

(56) Entgegenhaltungen:
- WO-A-2004/114643
- WO-A1-2005/051007
- US-A1- 2005 190 740
- KIM P ET AL: "IMS-based push-to-talk over GPRS/UMTS" WIRELESS COMMUNICATIONS AND NETWORKING CONFERENCE, 2005 IEEE NEW ORLEANS, LA, USA 13-17 MARCH 2005, PISCATAWAY, NJ, USA,IEEE, 13. März 2005 (2005-03-13), Seiten 2472-2477, XP010791564 ISBN: 0-7803-8966-2

## Beschreibung

Die Erfindung betrifft ein Verfahren zum Betreiben mehrerer Gruppendienste in einem Kommunikationsnetz.

In Kommunikationsnetzen, wie beispielsweise Mobilfunknetzen der dritten Generation, sind verschiedene als Gruppendienste bezeichnete Dienste bekannt. Hierbei handelt es sich um Dienste, die von Teilnehmern bzw. Mitgliedern einer Gruppe genutzt werden. Beispiele für in Mobilfunknetzen bekannte Gruppendienste sind Instant Messaging (IM), Push-to-Talk-over-Cellular (PoC), Spielanwendungen oder auch der so genannte Presence-Dienst. Die Übertragung der Daten des Gruppendienstes von und/oder zu den Teilnehmern der Gruppe kann dabei in Abhängigkeit von dem jeweiligen Gruppendienst entweder paketvermittelt oder aber auch leitungsvermittelt erfolgen.

Im Rahmen der so genannten "Open Mobile Alliance (OMA)" werden derzeit für den Mobilfunkbereich verschiedene Dienste und Anwendungen standardisiert. Neben einzelnen Gruppendiensten, wie etwa Push-to-Talk-over-Cellular, erarbeitet die OMA auch für die allgemeine Architektur von Gruppendiensten relevante Spezifikationen. So ist aus Kapitel 5.1.3 des Dokuments "XML Document Management Requirements, Candidate Version 1.0 - 17 Mar 2005, Open Mobile Alliance, OMA-RD-XDM-V1_0-20050317-C" die Möglichkeit der Definition von Gruppen bekannt, welche für mehrere Gruppendienste verwendet werden können. So kann etwa ein und dieselbe Gruppe im Rahmen der Gruppendienste Instant Messaging und Push-to-Talk-over-Cellular verwendet werden.

Die Patentanmeldung WO 2004/114643 A1 offenbart ein Verfahren zum Zusammenstellen einer sog. ad-hoc Gruppe innerhalb eines Kommunikationssystems. Die ad-hoc Gruppe ist eine sog. push-to-talk Gruppe in einem zellulären Mobilfunknetz. Dabei kann ein Teilnehmer durch das Drücken einer an einem Kommunikations-Endgerät vorgesehenen push-to-talk Taste allen anderen Teilnehmern der Gruppe Sprachinformationen übermitteln. Ein Teilnehmer kann auch Mitglied in mehreren Gruppen sein. Eine Telefonbuch-Anwendung ist vorgesehen, um einem Teilnehmer die Initiierung bzw. die Bildung einer ad-hoc Gruppe zu erleichtern. In dieser Telefonbuch-Anwendung können auch sog. Präsenzinformationen bezüglich der einzelnen Nutzer abgelegt sein.

Der vorliegenden Erfindung liegt die Aufgabe zugrunde, ein flexibleres und verbessertes Verfahren zum Betreiben von Gruppendiensten in einem Kommunikationsnetz anzugeben.

Diese Aufgabe wird erfindungsgemäß gelöst durch ein Verfahren gemäß den Merkmalen des Patentanspruchs 1.

Die Aufgabe der Gruppenlisten-Erzeugungseinheit besteht darin, die gruppendienstspezifischen und/oder gruppenspezifischen Ereignisdaten auszuwerten und basierend auf diesen Daten gruppenspezifische Listen für den Gruppendienst oder jeden der Gruppendienste zu erzeugen, welche den aktuellen Teilnahmezustand der Teilnehmer der Gruppe angeben. Dabei ist der Ausdruck "gruppendienstspezifisch" derart zu verstehen, dass gruppendienstspezifische Ereignisdaten nicht nur für die jeweilige Gruppe, sondern auch für den jeweiligen Gruppendienst spezifisch sind. Die gruppenspezifischen Ereignisdaten können beispielsweise dadurch gruppendienstspezifisch werden, dass sie für verschiedene Gruppendienste separat erfasst werden, oder in den gruppenspezifischen Ereignisdaten jeweils der genutzte Gruppendienst identifiziert wird. Bei gruppendienstspezifischen Ereignisdaten kann es sich beispielsweise um Informationen dazu handeln, dass ein Teilnehmer eine laufende Session eines Gruppendienstes verlässt (indem er beispielsweise sein Endgerät ausschaltet und damit seine Teilnahme an einer PoC-Session beendet) oder einem laufenden Gruppendienst, wie beispielsweise einer IM-Session, beitritt. Ein Beispiel für ein gruppenspezifisches Ereignis ist das Entfernen eines Teilnehmers aus der Gruppe.

Der Teilnahmezustand eines Teilnehmers kann somit beispielsweise dadurch gekennzeichnet sein, dass er an einer laufenden, durch einen Gruppendienst erbrachten, Gruppenaktivität wie beispielsweise einer PoC- oder einer IM-Session teilnimmt ("aktiv") oder nicht ("inaktiv"). In diesem Fall ist jeder Teilnehmer in der gruppenspezifischen Liste aufgeführt, diese Liste beinhaltet für jeden Teilnehmer der Gruppe eine explizite Angabe zu seinem Teilnahmezustand an den verschiedenen Gruppendiensten. Andererseits und vorzugsweise können in der gruppenspezifischen Liste auch jeweils nur die für den jeweiligen Gruppendienst aktiven Teilnehmer aufgeführt sein, d. h. der Teilnahmezustand ist in diesem Fall dadurch gegeben, dass die aktiven Teilnehmer in der Liste aufgeführt sind und die inaktiven nicht. Des Weiteren können die gruppenspezifischen Listen auch in entsprechende gruppendienstspezifische Listen aufgeteilt sein, d. h. in diesem Fall gibt es jeweils eine separate Liste für jeden der Gruppendienste.

Das erfindungsgemäße Verfahren ist vorteilhaft, da es eine zentrale Erzeugung und Verwaltung den aktuellen Teilnahmezustand der Teilnehmer der Gruppe angebender gruppenspezifischer Listen für den Gruppendienst oder jeden der Gruppendienste ermöglicht. Somit kann in einer zentralen Form die Information zur Verfügung gestellt werden, welche Teilnehmer einer Gruppe aktuell an einem Gruppendienst beteiligt sind. Die entsprechende Information kann somit verschiedensten Anwendungen und Nutzern von der Gruppenlisten-Erzeugungseinheit zur Verfügung gestellt werden, wofür sonst ein uneinheitlicher Zugriff von den Anwendungen und den Nutzern auf die jeweiligen Gruppendienste erforderlich wäre. Hierdurch würde die Interoperabilität und die Erweiterbarkeit stark eingeschränkt werden, was erfindungsgemäß vermieden wird.

Generell ist zu beachten, dass es sich bei der Ereignis-Erfassungseinheit und der Gruppenlisten-Erzeugungseinheit, ebenso wie bei den weiteren im Rahmen von vorteilhaften Weiterbildungen des erfindungsgemäßen Verfahrens verwendeten Einheiten, primär um logische Einheiten handelt. Dies bedeutet, dass eine Einheit durch ihre Funktion gekennzeichnet ist und nicht durch ihre konkrete hardware-technische Realisierung. Somit können beispielsweise die Ereignis-Erfassungseinheit und die Gruppenlisten-Erzeugungseinheit als separate, möglicherweise auch räumlich von einander entfernte Vorrichtungen ausgeführt sein, oder aber ganz oder teilweise in derselben technischen Vorrichtung realisiert werden.

Das erfindungsgemäße Verfahren kann vorzugsweise so ablaufen, dass die gruppenspezifischen Listen in der Gruppenlisten-Erzeugungseinheit gespeichert werden. Dies ist vorteilhaft, da somit die gruppenspezifischen Listen beispielsweise für eine spätere Nutzung durch Anwendungen oder Nutzer sowie für eine mögliche Weiterverarbeitung bzw. Überarbeitung durch die Gruppenlisten-Erzeugungseinheit vorgehalten werden.

Vorzugsweise ist das erfindungsgemäße Verfahren so ausgebildet, dass die gruppendienstspezifischen und/oder gruppenspezifischen Ereignisdaten von der Ereignis-Erfassungseinheit protokolliert werden und zumindest die Teilmenge der gruppendienstspezifischen und/oder gruppenspezifischen Ereignisdaten von der Ereignis-Erfassungseinheit an die Gruppenlisten-Erzeugungseinheit übermittelt wird. Diese Ausführungsform bietet den Vorteil, dass die gruppendienstspezifischen und/oder gruppenspezifischen Ereignisdaten nicht zwangsläufig unmittelbar nach ihrer Erfassung durch die Ereignis-Erfassungseinheit an die Gruppenlisten-Erzeugungseinheit übermittelt werden müssen. Des Weiteren kann das Protokoll der gruppendienstspezifischen und/oder gruppenspezifischen Ereignisdaten dafür verwendet werden, nach einem zeitlich begrenzten Ausfall der Verbindung zwischen der Ereignis-Erfassungseinheit und der Gruppenlisten-Erzeugungseinheit, bzw. einem zeitlich begrenzten Ausfall der Gruppenlisten-Erzeugungseinheit selbst, das Übermitteln zumindest der Teilmenge der gruppendienstspezifischen und/oder gruppenspezifischen Ereignisdaten an die Gruppenlisten-Erzeugungseinheit zu einem späteren Zeitpunkt nachzuholen bzw. zu wiederholen.

Das erfindungsgemäße Verfahren kann vorteilhafterweise so ausgeprägt sein, dass zumindest die Teilmenge der gruppendienstspezifischen und/oder gruppenspezifischen Ereignisdaten jeweils unmittelbar nach ihrer Erfassung von der Ereignis-Erfassungseinheit an die Gruppenlisten-Erzeugungseinheit übermittelt wird. Die unmittelbare Übermittlung zumindest der Teilmenge der gruppendienstspezifischen und/oder gruppenspezifischen Ereignisdaten an die Gruppenlisten-Erzeugungseinheit ist bevorzugt, da hierdurch sicher gestellt wird, dass der Gruppenlisten-Erzeugungseinheit zu jedem Zeitpunkt die aktuellen Ereignisdaten zur Auswertung vorliegen. Dabei können die betreffenden Ereignisdaten neben der unmittelbaren Übermittlung an die Gruppenlisten-Erzeugungseinheit vorzugsweise zusätzlich von der Ereignis-Erfassungseinheit protokolliert werden.

Das erfindungsgemäße Verfahren kann auch so ablaufen, dass das Auswerten der gruppendienstspezifischen und/oder gruppenspezifischen Ereignisdaten und das Erzeugen der gruppenspezifischen Listen durch die Gruppenlisten-Erzeugungseinheit jeweils unmittelbar nach Empfang zumindest der Teilmenge der gruppendienstspezifischen und/oder gruppenspezifischen Ereignisdaten erfolgt. Diese Ausführungsform ist bevorzugt, da somit unmittelbar nach Empfang zumindest der Teilmenge der gruppendienstspezifischen und/oder gruppenspezifischen Ereignisdaten, d. h. ohne zeitliche Verzögerung, die gruppenspezifischen Listen für den Gruppendienst oder jeden der Gruppendienste bezüglich des aktuellen Teilnahmezustands der Teilnehmer der Gruppe erzeugt werden und für Anwendungen oder Nutzer zur Verfügung gestellt werden können.

In einer weiteren bevorzugten Ausführungsform läuft das erfindungsgemäße Verfahren so ab, dass das Auswerten der gruppendienstspezifischen und/oder gruppenspezifischen Ereignisdaten und das Erzeugen der gruppenspezifischen Listen durch die Gruppenlisten-Erzeugungseinheit nach Empfang einer Aufforderung zur Übermittlung einer Liste der für den jeweiligen Gruppendienst bzw. die Gruppendienste einer Gruppe aktiven Teilnehmer erfolgt. Dies ist vorteilhaft, da die grüppenspezifischen Listen somit nicht dauernd, d. h. jeweils nach Empfangen zumindest der Teilmenge der Ereignisdaten, sondern nur bei einer entsprechenden Anfrage erzeugt werden. Dabei kann vorzugsweise auch das Übermitteln zumindest der Teilmenge der gruppendienstspezifischen und/oder gruppenspezifischen Ereignisdaten von der Ereignis-Erfassungseinheit von der Gruppenlisten-Erzeugungseinheit nach Empfang der Aufforderung angestoßen werden, so dass die entsprechende Übermittlung ebenfalls nur bei Vorliegen der Aufforderung zur Übermittlung der Liste der für den jeweiligen Gruppendienst bzw. die Gruppendienste einer Gruppe aktiven Teilnehmer erfolgt.

Das erfindungsgemäße Verfahren kann vorzugsweise auch so ablaufen, dass zusätzlich zumindest die vergebührungsrelevanten gruppendienstspezifischen und/oder die vergebührungsrelevanten gruppenspezifischen Ereignisdaten von der Ereignis-Erfassungseinheit an eine Gruppen-Gebühren-Verarbeitungseinheit übermittelt werden und die vergebührungsrelevanten gruppendienstspezifischen und/oder die vergebührungsrelevanten gruppenspezifischen Ereignisdaten durch die Gruppen-Gebühren-Verarbeitungseinheit ausgewertet werden und nutzungsabhängige und teilnehmerspezifische Vergebührungsdaten durch die Gruppen-Gebühren-Verarbeitungseinheit erzeugt werden. Die Aufgabe der Gruppen-Gebühren-Verarbeitungseinheit besteht darin, den vergebührungsrelevanten Anteil der gruppenspezifischen Ereignisdaten auszuwerten und basierend auf diesen Daten nutzungsabhängige und teilnehmerspezifische Vergebührungsdaten zu erzeugen. Hierdurch wird es vorteilhafterweise ermöglicht, auch für Gruppendienste eine teilnehmerspezifische Vergebührung nach differenzierten Kriterien vorzunehmen.

Das erfindungsgemäße Verfahren kann in einer weiteren bevorzugten Ausführungsform auch so ablaufen, dass zumindest vergebührungsrelevante gruppendienstspezifische und/oder zumindest vergebührungsrelevante gruppenspezifische Ereignisdaten jeweils unmittelbar nach ihrer Erfassung von der Ereignis-Erfassungseinheit an die Gruppen-Gebühren-Verarbeitungseinheit übermittelt werden. Die Übermittlung der jeweiligen Ereignisdaten unmittelbar nach ihrer Erfassung ist vorteilhaft, da diese somit in Echtzeit zur Auswertung durch die Gruppen-Gebühren-Verarbeitungseinheit zur Verfügung stehen. Hierdurch ist auch für so genannte Pre-Paid-Kunden, für welche aufgrund der Verwendung vorausbezahlter Konten eine Berechnung der Gebühren in Echtzeit erforderlich ist, eine nutzungsabhängige und teilnehmerspezifische Vergebührung der Teilnehmer des Gruppendienstes möglich.

Das erfindungsgemäße Verfahren kann vorzugsweise auch so ausgestaltet sein, dass die Vergebührungsdaten zur teilnehmerspezifischen Nachverarbeitung von der Gruppen-Gebühren-Verarbeitungseinheit an zumindest eine Vergebührungseinheit übermittelt werden. Bei der Vergebührungseinheit handelt es sich vorzugsweise um das standardmäßig von dem jeweiligen Dienstanbieter oder Netzbetreiber zur Tarifierung und Vergebührung verwendete Datenverarbeitungssystem. Vorzugsweise werden die nutzungsabhängigen und teilnehmerspezifischen Vergebührungsdaten eines Teilnehmers eines Gruppendienstes somit jeweils gemeinsam mit solchen Vergebührungsdaten des Teilnehmers, welche nicht aus der Nutzung von Gruppendiensten stammen, weiter- bzw. nachverarbeitet.

In einer weiteren bevorzugten Ausführungsform kann das erfindungsgemäße Verfahren auch so ablaufen, dass als Ereignis-Erfassungseinheit ein Gruppenverwaltungs-Server verwendet wird, auf dem die für die Einrichtung und Verwaltung der Gruppe des Gruppendienstes relevanten Daten gespeichert sind. Diese Ausführungsform des erfindungsgemäßen Verfahrens ist vorteilhaft, da mit dem Gruppenverwaltungs-Server bereits eine Komponente zur Verfügung steht, welche gruppenspezifische Informationen speichert. Eine zusätzliche Nutzung des Gruppenverwaltungs-Servers als Ereignis-Erfassungseinheit ist bevorzugt, da hierdurch die Einführung einer zusätzlichen Komponente vermieden wird. Alle für die Teilnehmer der Gruppe spezifischen Informationen können somit an einer zentralen Stelle verwaltet werden.

Alternativ kann in einer weiteren bevorzugten Ausführungsform des erfindungsgemäßen Verfahrens als Ereignis-Erfassungseinheit ein Gruppendienst-Server verwendet werden, der den Gruppendienst mittels des Kommunikationsnetzes für die Gruppe zur Verfügung stellt. Diese Ausführungsform ist bevorzugt, da der Gruppendienst-Server unmittelbar alle mit der Nutzung des Gruppendienstes verbundenen Ereignisdaten registriert. Somit entfällt das Übermitteln der gruppenspezifischen Ereignisdaten an eine separate Ereignis-Erfassungseinheit. Sofern ein Gruppendienst-Server mehrere Arten von Gruppendiensten zur Verfügung stellt, können die gruppenspezifischen Ereignisdaten mehrerer Gruppendienste in derselben Ereignis-Erfassungseinheit erfasst werden. Werden unterschiedliche Gruppendienste mittels verschiedener Gruppendienst-Server angeboten, so kann jedoch die Realisierung der Ereignis-Erfassungseinheit als eigene separate, vorzugsweise zentrale Komponente oder als Bestandteil des Gruppenverwaltungs-Servers bevorzugt sein.

Bei dem Kommunikationsnetz kann es sich beispielsweise um ein Telekommunikationsfestnetz oder das Internet handeln. Besonders bevorzugt ist jedoch die Ausführungsform des erfindungsgemäßen Verfahrens, dass als Kommunikationsnetz ein Mobilfunknetz verwendet wird.

In einer weiteren bevorzugten Ausführungsform des erfindungsgemäßen Verfahrens wird der Gruppendienst über die Grenze des Kommunikationsnetzes hinweg betrieben. Dies bedeutet, dass die Teilnehmer der Gruppe auch Kunden unterschiedlicher Netzbetreiber bzw. Dienstanbieter sein können, d. h. ein Gruppendienst kann beispielsweise in mehreren Mobilfunknetzen betrieben werden. Weiterhin kann das Betreiben des Gruppendienstes auch ganz generell über Netzwerkgrenzen hinweg erfolgen. Dies bedeutet, dass die Teilnehmer einer Gruppe unterschiedliche Transportmechanismen und Zugangstechnologien bei der Nutzung eines Gruppendienstes verwenden können. Ein Beispiel hierfür ist eine Gruppe, die Teilnehmer aus einem Mobilfunknetz, einem Festnetz und dem Internet umfasst.

Die Erfindung betrifft des Weiteren eine Anordnung zum Betreiben von Gruppendiensten in einem Kommunikationsnetz.

Diesbezüglich liegt der Erfindung die Aufgabe zugrunde, eine flexiblere und verbesserte Anordnung zum Betreiben mehrerer Gruppendienste in einem Kommunikationsnetz anzugeben.

Diese Aufgabe wird erfindungsgemäß gelöst durch eine Anordnung gemäß Patentanspruch 14. Dabei kann es sich bei der Teilmenge der gruppendienstspezifischen und/oder gruppenspezifischen Ereignisdaten um den Anteil der entsprechenden Daten handeln, der hinsichtlich der Erzeugung der gruppenspezifischen Listen relevant ist, d. h. den Teilnahmezustand von Teilnehmern der Gruppe an dem Gruppendienst oder einem der Gruppendienste betrifft.

Die erfindungsgemäße Anordnung bietet den Vorteil, dass sie es ermöglicht, dass die Gruppenlisten-Erzeugungseinheit als zentrale Komponente Listen hinsichtlich des aktuellen Teilnahmezustands der Teilnehmer einer Gruppe bezüglich eines von der Gruppe genutzten Gruppendienstes oder mehrerer von der Gruppe genutzter Gruppendienste erstellt. Die entsprechenden Informationen können für unterschiedliche Anwendungen bzw. von verschiedenen Nutzern verwendet werden. Vorzugsweise handelt es sich bei der Gruppenlisten-Erzeugungseinheit um eine gruppendienstübergreifende Einheit derart, dass der Teilnahmezustand für alle Aktivitäten der Gruppe, d. h. für alle Gruppendienste, an einer zentralen Stelle ermittelt wird.

Die erfindungsgemäße Anordnung kann vorzugsweise auch so ausgestaltet sein, dass sie der Gruppenlisten-Erzeugungseinheit zugeordnete Speichermittel zum Speichern der gruppenspezifischen Listen aufweist. Dies ist vorteilhaft, da hierdurch die gruppenspezifischen Listen in den Speichermitteln für eine spätere Verwendung vorgehalten werden können. Des Weiteren ist somit nach dem Empfang neuer Ereignisdaten lediglich eine Aktualisierung der Listen der neu empfangenen Daten erforderlich.

In einer weiteren bevorzugten Ausführungsform der erfindungsgemäßen Anordnung ist die Ereignis-Erfassungseinheit zur Übermittlung zumindest der Teilmenge der gruppendienstspezifischen und/oder gruppenspezifischen Ereignisdaten jeweils unmittelbar nach ihrer Erfassung an die Gruppenlisten-Erzeugungseinheit ausgebildet. Gemäß den vorherigen Ausführungen ist dies vorteilhaft, da somit die entsprechenden Daten der Gruppenlisten-Erzeugungseinheit ohne zeitliche Verzögerung zur Verfügung stehen.

Vorteilhafterweise ist die erfindungsgemäße Anordnung so ausgestaltet, dass die Analysemittel zum Auswerten der gruppendienstspezifischen und/oder gruppenspezifischen Ereignisdaten und die Gruppenlistenerzeugungsmittel zum Erzeugen der gruppenspezifischen Listen jeweils unmittelbar nach Empfang zumindest der Teilmenge der gruppendienstspezifischen und/oder gruppenspezifischen Ereignisdaten ausgebildet sind. Diese Ausführungsform ist bevorzugt, da sie eine Aktualisierung der gruppenspezifischen Listen unmittelbar nach einer Änderung des Teilnahmezustands einer oder mehrerer Teilnehmer der Gruppe an dem Gruppendienst oder mehreren Gruppendiensten ermöglicht.

Alternativ kann die erfindungsgemäße Anordnung vorzugsweise auch so ausgeführt sein, dass die Analysemittel zum Auswerten der gruppendienstspezifischen und/oder gruppenspezifischen Ereignisdaten und die Gruppenlistenerzeugungsmittel zum Erzeugen der gruppenspezifischen Listen nach Empfang einer Aufforderung zur Übermittlung einer Liste der für den jeweiligen Gruppendienst aktiven Teilnehmer ausgebildet sind. Dies bietet den Vorteil, dass das Übermitteln der gruppendienstspezifischen und/oder gruppenspezifischen Ereignisdaten von der Ereignis-Erfassungseinheit an die Gruppenlisten-Erzeugungseinheit jeweils nur nach Empfang einer Aufforderung zum Übermitteln der gruppenspezifischen Liste erfolgt, wodurch die Anzahl der Datenübertragungsvorgänge minimiert wird. Dabei kann die Aufforderung beispielsweise von Seiten einer Anwendung oder eines Nutzers erfolgen.

In einer besonders bevorzugten Ausführungsform der erfindungsgemäßen Anordnung ist die Ereignis-Erfassungseinheit zusätzlich zum Übermitteln zumindest vergebührungsrelevanter gruppendienstspezifischer und/oder zumindest vergebührungsrelevanter gruppenspezifischer Ereignisdaten an eine Gruppen-Gebühren-Verarbeitungseinheit und die Gruppen-Gebühren-Verarbeitungseinheit zum Auswerten zumindest der vergebührungsrelevanten gruppendienstspezifischen und/oder zumindest der vergebührungsrelevanten gruppenspezifischen Ereignisdaten und zum Erzeugen von nutzungsabhängigen und teilnehmerspezifischen Vergebührungsdaten ausgebildet. Diese Ausführungsform der erfindungsgemäßen Anordnung ist vorteilhaft, da sie eine nutzungsabhängige Vergebührung der Teilnehmer des Gruppendienstes ermöglicht.

Vorzugsweise kann die erfindungsgemäße Anordnung auch so ausgeprägt sein, dass die Ereignis-Erfassungseinheit zur Übermittlung zumindest der vergebührungsrelevanten gruppenspezifischen und/oder zumindest der gruppendienstspezifischen Ereignisdaten jeweils unmittelbar nach ihrer Erfassung an die Gruppen-Gebühren-Verarbeitungseinheit ausgebildet ist. Die Übermittlung der vergebührungsrelevanten gruppenspezifischen Ereignisdaten bzw. der vergebührungsrelevanten gruppendienstspezifischen Ereignisdaten in Echtzeit an die Gruppen-Gebühren-Verarbeitungseinheit ist bevorzugt, da hierdurch eine Echtzeitvergebührung beispielsweise von so genannten Pre-Paid-Teilnehmern erfolgen kann, für welche die Vergebührung unter Verwendung vorausbezahlter Konten vorgenommen wird. Es sei darauf hingewiesen, dass auch bei der Verwendung eines solchen Pre-Paid-Systems parallel ein Protokollieren der gruppenspezifischen und/oder der gruppendienstspezifischen Ereignisdaten erfolgen kann. Diese Protokollierung dient jedoch in diesem Fall zumindest bezüglich der Pre-Paid-Teilnehmer nicht der Erzeugung von nutzungsabhängigen und teilnehmerspezifischen Vergebührungsdaten, sondern kann für weitere Anwendungen verwendet werden.

Vorzugsweise ist die erfindungsgemäße Anordnung so ausgestaltet, dass mit der Gruppen-Gebühren-Verarbeitungseinheit eine Vergebührungseinheit verbunden ist zum Empfangen der Vergebührungsdaten und zu deren teilnehmerspezifischen Nachverarbeitung. Diese Ausführungsform ist vorteilhaft, da somit die mittels der Vergebührungsdatenmittel der Gruppen-Gebühren-Verarbeitungseinheit erzeugten nutzungsabhängigen und teilnehmerspezifischen Vergebührungsdaten analog zu solchen Daten, die nicht aus der Nutzung von Gruppendiensten stammen, weiterverarbeitet werden können. Hierdurch besteht die Möglichkeit, für einen Teilnehmer eine Rechnung zu erstellen, welche sowohl die im Rahmen der Nutzung von Gruppendiensten als auch die im Rahmen der Nutzung anderer Dienste angefallenen Gebühren beinhaltet.

Vorzugsweise ist die erfindungsgemäße Anordnung so ausgebildet, dass die Ereignis-Erfassungseinheit ein Gruppenverwaltungs-Server ist, auf dem die für die Einrichtung und Verwaltung der Gruppe des Gruppendienstes relevanten Daten gespeichert sind. Wie bereits im Zusammenhang mit dem erfindungsgemäßen Verfahren beschrieben, bietet die Verwendung des Gruppenverwaltungs-Servers als Ereignis-Erfassungseinheit den Vorteil, dass alle die Verwaltung und Vergebührung einer Gruppe betreffenden Daten an einer zentralen Stelle gespeichert beziehungsweise erfasst werden.

In einer weiteren bevorzugten Ausführungsform der erfindungsgemäßen Anordnung ist die Ereignis-Erfassungseinheit ein Gruppendienst-Server, der den Gruppendienst mittels des Kommunikationsnetzes für die Gruppe zur Verfügung stellt. Dies bietet den Vorteil, dass die Ereignisdaten des Gruppendienstes unmittelbar an ihrem Entstehungsort von der Ereignis-Erfassungseinheit erfasst werden.

Die erfindungsgemäße Anordnung kann vorzugsweise so ausgestaltet sein, dass das Kommunikationsnetz ein Mobilfunknetz ist.

Zur weiteren Erläuterung des erfindungsgemäßen Verfahrens und der erfindungsgemäßen Anordnung zeigt die
- Figur: in einer schematischen Darstellung ein Ausführungs- beispiel der erfindungsgemäßen Anordnung.

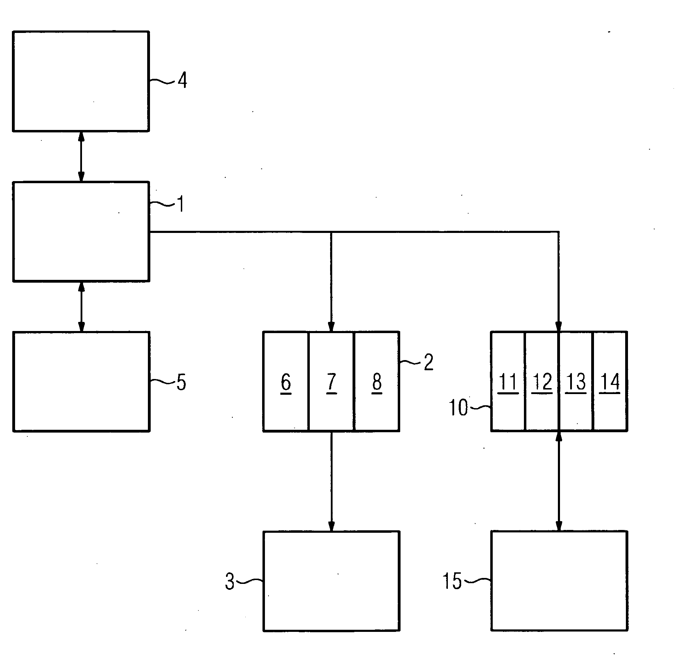

In der Figur ist eine Ereignis-Erfassungseinheit 1 erkennbar, welche sowohl mit einem Gruppenverwaltungs-Server 4 als auch mit einem Gruppendienst-Server 5 verbunden ist. Dabei handelt es sich um eine elektrische Verbindung, welche drahtgebunden oder drahtlos ausgeführt sein kann.

Auf dem Gruppenverwaltungs-Server 4 sind alle für die Einrichtung und Verwaltung einer Gruppe relevanten Daten gespeichert. So wird in Gruppendiensten, welche auch als gruppenbasierte Dienste bezeichnet werden, wie beispielsweise Instant Messaging (IM), in der Regel eine feste Zuordnung der Teilnehmer zu Gruppen getroffen, d. h. es existieren feste Gruppendefinitionen. Im Falle eines Instant Messaging-Dienstes kann eine solche Gruppendefinition z. B. genutzt werden, um die Kommunikation mit den anderen Gruppenmitgliedern zuzulassen. Dies bedeutet, dass nur Teilnehmer der Gruppe zu einer Kommunikation zugelassen werden. Des Weiteren kann die Gruppe auch dazu verwendet werden, den so genannten Presence-Status der anderen Teilnehmer der Gruppe zu überwachen. Dies bedeutet, dass der Teilnehmer durch die Mitgliedschaft in der Gruppe sein Einverständnis damit erklärt, dass andere Teilnehmer seinen Anwesenheitszustand überwachen können. Dies kann etwa dadurch geschehen, dass angezeigt wird, ob der entsprechende Teilnehmer der Gruppe über ein bestimmtes Kommunikationsmittel (E-mail, IM, Mobilfunktelefon, ...) aktuell erreichbar ist oder nicht.

Der Gruppendienst-Server 5 dient dem Ablauf des Gruppendienstes und verteilt die Nachrichten des Gruppendienstes über das von den Teilnehmern zur Kommunikation verwendete Kommunikationsnetz. Dabei werden dem Gruppendienst-Server 5 die gruppendienstspezifischen Adressen der Teilnehmer bzw. Mitglieder der Gruppe von dem Gruppenverwaltungs-Server 4 mitgeteilt.

Die Ereignis-Erfassungseinheit 1 kann in dem dargestellten Ausführungsbeispiel sowohl von dem Gruppenverwaltungs-Server 4 als auch vom Gruppendienst-Server 5 gruppendienstspezifische Ereignisdaten empfangen, d. h. in dem dargestellten Ausführungsbeispiel sind die erfassten Ereignisdaten nicht nur für die jeweilige Gruppe, sondern auch für den jeweiligen Gruppendienst spezifisch. Es sei darauf hingewiesen, dass die Ereignis-Erfassungseinheit 1 in der Regel jedoch sowohl gruppendienstspezifische als auch gruppenspezifische Ereignisdaten erfassen wird. Die Ereignisdaten können von dem Gruppenverwaltungs-Server 4 und dem Gruppendienst-Server 5 an die Ereignis-Erfassungseinheit 1 gesendet oder von Seiten der Ereignis-Erfassungseinheit 1 von dem Gruppenverwaltungs-Server 4 und dem Gruppendienst-Server 5 abgefragt werden. Darüber hinaus besteht auch die Möglichkeit, dass die Ereignis-Erfassungseinheit 1 die Ereignisdaten durch Mitschneiden von zwischen dem Gruppenverwaltungs-Server 4 und dem Gruppendienst-Server 5 ausgetauschten Nachrichten erfasst.

Es sei darauf hingewiesen, dass die Ereignis-Erfassungseinheit 1 alternativ zu der Darstellung in der Figur auch als Bestandteil des Gruppenverwaltungs-Servers 4 oder des Gruppendienst-Servers 5 realisiert werden kann. Generell sei an dieser Stelle noch einmal darauf hingewiesen, dass es sich bei den dargestellten Komponenten um logische Einheiten handelt, welche nicht zwangsläufig in separaten Hardware-Komponenten realisiert sein müssen.

Die gruppendienstspezifischen Ereignisdaten, die vorzugsweise eine den Zeitpunkt des Eintretens des jeweiligen Ereignisses kennzeichnende Zeitangabe enthalten, können beispielsweise Informationen zu den folgenden Ereignissen bzw. Fragen enthalten:
- Welcher Teilnehmer hat die betreffende Gruppe eingerichtet?
- Welcher Teilnehmer wurde in die Gruppe aufgenommen?
- Welcher Teilnehmer hat die Gruppe verlassen?
- Welcher Teilnehmer hat welche Daten verteilt?
- Welcher Teilnehmer hat welche Nachrichten gesendet und welche Datengröße hatten die betreffenden Nachrichten?
- Welcher Teilnehmer hat welche Nachrichten empfangen und welche Datengröße hatten die betreffenden Nachrichten?

Handelt es sich bei dem Gruppendienst beispielsweise um einen so genannten Chat-Dienst, so können entsprechende Ereignisdaten etwa in Abhängigkeit von dem Einrichten eines Chat-Rooms, der Zeitdauer des Verweilens in dem Chat-Room oder auch dem Eintreten oder Verlassen des Chat-Rooms erfasst werden.

Die Anzahl der Teilnehmer wird sich während der Zeitdauer, die ein Gruppendienst aktiv ist, üblicherweise dynamisch mit der Zeit ändern. So ist es bei dem angeführten Beispiel eines Chat-Dienstes recht wahrscheinlich, dass nicht alle Teilnehmer der fest definierten Gruppe an dieser Aktivität teilnehmen. Ursache hierfür kann beispielsweise sein, dass nicht alle der fest definierten Gruppenmitglieder zeitlich verfügbar sind. Des Weiteren ist es auch denkbar, dass weitere Teilnehmer an der Gruppenaktivität (d. h. der Nutzung des Gruppendienstes) teilnehmen, die nicht zu der fest definierten Gruppe gehören. Diese auf andere Art in die Gruppenaktivität aufgenommen Teilnehmer können beispielsweise durch direkte Einladung eines der Teilnehmer der Gruppe der Gruppenaktivität beigetreten sein. Im Verlauf der Gruppenaktivität kann nun beispielsweise bei den Teilnehmern der Wunsch entstehen, mit den gerade aktiven Teilnehmern einen Wechsel des für die Kommunikation verwendeten Gruppendienstes vorzunehmen. So könnte sich etwa eine IM-Sitzung als zu mühsam und unproduktiv herausstellen und somit das Umschalten auf einen anderen Gruppendienst wie beispielsweise Push-to-Talk-over-Cellular (PoC) gewünscht sein. Damit ein entsprechender Wechsel des Gruppendienstes durchgeführt werden kann ist es jedoch Voraussetzung, dass der Komponente, die den Dienstwechsel durchführen möchte, bekannt ist, welche Teilnehmer gerade aktiv an der Gruppenaktivität beteiligt sind. Darüber hinaus sind viele weitere Anwendungsfälle denkbar, in denen die Information benötigt wird, welche Teilnehmer aktuell an einem Gruppendienst der Gruppe teilnehmen.

Die Ereignis-Erfassungseinheit 1 ist darüber hinaus mit einer Gruppenlisten-Erzeugungseinheit 10 verbunden. Die erfassten gruppendienstspezifischen Ereignisdaten werden von der Ereignis-Erfassungseinheit 1 an die Gruppenlisten-Erzeugungseinheit 10 übermittelt. Dabei ist nicht zwingend die Übermittlung aller gruppendienstspezifischen Ereignisdaten erforderlich, sondern es kann auch lediglich eine Übermittlung einer Teilmenge erfolgen. Hierzu kann durch die Ereignis-Erfassungseinheit 1 eine Auswahl derjenigen gruppendienstspezifischen Ereignisdaten vorgenommen werden, die für den Teilnahmezustand eines Teilnehmers der Gruppe an dem entsprechenden Gruppendienst relevant sind. Die entsprechende Auswahl kann dabei nach verschiedenen Kriterien, wie beispielsweise der Art des Ereignisses, erfolgen. Alternativ kann eine entsprechende Auswahl von Ereignisdaten auch erst nach der Übermittlung durch die Gruppenlisten-Erzeugungseinheit 10 vorgenommen werden.

Die Gruppenlisten-Erzeugungseinheit 10 weist Empfangsmittel 11 zum Empfangen zumindest der Teilmenge der gruppendienstspezifischen Ereignisdaten von der Ereignis-Erfassungseinheit 1 auf sowie Analysemittel 12 zum Auswerten der gruppendienstspezifischen Ereignisdaten. Als Ergebnis der Auswertung erzeugen Gruppenlistenerzeugungsmittel 13 gruppenspezifische Listen, wobei die Listen für den Gruppendienst oder jeden der Gruppendienste den aktuellen Teilnahmezustand der Teilnehmer der Gruppe angeben. Darüber hinaus besitzt die Gruppenlisten-Erzeugungseinheit 10 Speichermittel 14 zum Speichern der gruppenspezifischen Listen.

Mit der Gruppenlisten-Erzeugungseinheit 10 ist weiterhin ein Anwendungs-Server 15 verbunden. Auf dem Anwendungs-Server 15 läuft eine Software-Anwendung, welche zum Erfüllen ihrer Funktion, d. h. um beispielsweise eines Wechsel des verwendeten Gruppendienstes durchzuführen, die Liste der für einen Gruppendienst augenblicklich aktiven Teilnehmer einer Gruppe benötigt. Zu diesem Zweck schickt der Anwendungs-Server 15 eine Anfragenachricht an die Gruppenlisten-Erzeugungseinheit 10. Diese liest die entsprechende gruppenspezifische Liste aus den Speichermitteln 14 und übermittelt sie in einer Antwortnachricht an den Anwendungs-Server 15. Alternativ könnte die Gruppenlisten-Erzeugungseinheit 10 die gruppenspezifischen Ereignisdaten auch erst nach Empfang der Anfragenachricht von der Ereignis-Erfassungseinheit 1 anfordern. Die Ereignis-Erfassungseinheit 1 hat in diesem Fall die Ereignisdaten protokolliert und übersendet das Protokoll aufgrund der Anfrage an die Gruppenlisten-Erzeugungseinheit 10. Es sei darauf hingewiesen, dass die gruppenspezifische Liste auch auf mehrere gruppendienstspezifische Listen aufgeteilt sein kann. In letzterem Fall gibt es somit für jeden Gruppendienst eine eigene Liste, die die für diesen Gruppendienst aktiven Teilnehmer identifiziert, während bei einer gruppenspezifischen Liste die entsprechende Information hinsichtlich der von den Teilnehmern der Gruppe genutzten Gruppendienste zusammengefasst sind. Die Verwendung der Gruppenlisten-Erzeugungseinheit 10 bietet somit den Vorteil, dass der Anwendungs-Server 15 unabhängig davon, zu welchem Gruppendienst er die Liste der aktiven Teilnehmer einer Gruppe erfragen möchte, nur eine Schnittstelle bzw. Verbindung zur Gruppenlisten-Erzeugungseinheit 10 benötigt und nicht etwa separate Verbindungen zu möglicherweise vielen verschiedenen Gruppendienst-Servern. Dies erleichtert das Zusammenspiel der entsprechenden Einheiten und ist somit insbesondere auch bezüglich einer erleichterten Erweiterbarkeit vorteilhaft.

In dem in der Figur dargestellten Ausführungsbeispiel werden die erfassten gruppendienstspezifischen Ereignisdaten darüber hinaus von der Ereignis-Erfassungseinheit 1 an eine Gruppen-Gebühren-Verarbeitungseinheit 2 übermittelt. Dabei ist wiederum nicht zwingend die Übermittlung aller gruppendienstspezifischen Ereignisdaten erforderlich, sondern es kann auch lediglich eine Übermittlung des vergebührungsrelevanten Anteils erfolgen. Hierzu kann durch die Ereignis-Erfassungseinheit 1 eine Auswahl derjenigen gruppendienstspezifischen Ereignisdaten vorgenommen werden, die für die Vergebührung relevant sind. Die entsprechende Auswahl kann ebenfalls nach verschiedenen Kriterien, wie beispielsweise der Art des Ereignisses, erfolgen. Alternativ kann eine entsprechende Auswahl von Ereignisdaten auch erst nach der Übermittlung durch die Gruppen-Gebühren-Verarbeitungseinheit 2 vorgenommen werden.

Die Gruppen-Gebühren-Verarbeitungseinheit 2 weist Empfangsmittel 6 zum Empfangen der gruppendienstspezifischen Ereignisdaten und Analysemittel 7 zum Auswerten der vergebührungsrelevanten gruppendienstspezifischen Ereignisdaten auf. Als Ergebnis der Auswertung erzeugen Vergebührungsdatenmittel 8 der Gruppen-Gebühren-Verarbeitungseinheit 2 nutzungsabhängige und teilnehmerspezifische Vergebührungsdaten. Diese Vergebührungsdaten werden zur teilnehmerspezifischen Nachverarbeitung von der Gruppen-Gebühren-Verarbeitungseinheit 2 an die Vergebührungseinheit 3 übermittelt.

Die Vergebührungseinheit 3 führt eine Nachverarbeitung der durch die Gruppen-Gebühren-Verarbeitungseinheit 2 aufbereiteten Vergebührungsdaten durch. Sofern es sich bei den Teilnehmern der Gruppe um Kunden unterschiedlicher Dienstanbieter oder unterschiedlicher Netzbetreiber handelt, so kann die Übertragung der Vergebührungsdaten für die jeweiligen Teilnehmer auch an mehrere, unterschiedliche Vergebührungseinheiten erfolgen. Alternativ ist es auch möglich, dass bereits die Ereignis-Erfassungseinheit 1 eine dienstanbieter- und/oder netzbetreiberabhängige Filterung der Ereignisdaten vornimmt und die entsprechenden Ereignisdaten an verschiedene Gruppen-Gebühren-Verarbeitungseinheiten 2 überträgt.

Handelt es sich bei den Teilnehmern des Gruppendienstes um Post-Paid-Teilnehmer, so werden die gruppendienstspezifischen Ereignisdaten von der Ereignis-Erfassungseinheit 1 in ein Protokoll geschrieben. Das Protokoll beinhaltet dabei vorzugsweise alle gruppendienstspezifischen Ereignisdaten oder aber zumindest alle vergebührungsrelevanten gruppendienstspezifischen Ereignisdaten. Die Ereignis-Erfassungseinheit 1 kann das Protokoll beispielsweise in Form eines so genannten Log-Files oder in einer Datenbank speichern. Dabei werden die die Gruppe bzw. die Nutzung des Gruppendienstes betreffenden dynamischen Vorgänge vorzugsweise mit einem Zeitstempel versehen, wodurch festgehalten wird, welcher Teilnehmer in welcher Form und zu welchem Zeitpunkt den jeweiligen Gruppendienst genutzt hat. Die Übermittlung der gruppendienstspezifischen bzw. der vergebührungsrelevanten gruppendienstspezifischen Ereignisdaten von der Ereignis-Erfassungseinheit 1 an die Gruppen-Gebühren-Verarbeitungseinheit 2 kann dabei beispielsweise durch das Aufbauen einer FTP-Verbindung mit anschließendem Laden des Protokolls auf die Gruppen-Gebühren-Verarbeitungseinheit 2 erfolgen.

Handelt es sich bei den Teilnehmern des Gruppendienstes um Teilnehmer mit vorausbezahlten Konten (so genannte Pre-Paid-Teilnehmer), so sendet die Ereignis-Erfassungseinheit 1 die vergebührungsrelevanten gruppendienstspezifischen Ereignisdaten unmittelbar nach ihrer Erfassung an die Gruppen-Gebühren-Verarbeitungseinheit 2. Dabei kann die Gruppen-Gebühren-Verarbeitungseinheit 2 einen Teil eines Pre-Paid-Systems darstellen, oder aber diesem als separate logische Funktionseinheit vorgeschaltet sein. Die vergebührungsrelevanten gruppendienstspezifischen Ereignisdaten werden hierbei mit möglichst geringer zeitlicher Verzögerung an das Pre-Paid-System übermittelt, damit sichergestellt wird, dass die Nutzung des Gruppendienstes immer durch ein entsprechendes vorausbezahltes Guthaben des Teilnehmers gedeckt ist. Das Versenden von die Ereignisdaten enthaltenden Nachrichten von der Ereignis-Erfassungseinheit 1 an die Gruppen-Gebühren-Verarbeitungseinheit 2 kann hierbei zeitgleich mit dem gegebenenfalls zusätzlichen Schreiben der entsprechenden Information in ein Protokoll erfolgen. Alternativ zu dem Versenden der Nachrichten durch die Ereignis-Erfassungseinheit 1 kann auch eine ständige Abfrage (Polling) der Ereignis-Erfassungseinheit 1 durch die Gruppen-Gebühren-Verarbeitungseinheit 2 oder durch eine zusätzliche zwischengeschaltete Komponente erfolgen. Des Weiteren ist beispielsweise auch eine ereignisgesteuerte Fernüberwachung des in diesem Fall auf einem geteilten Dateisystem abgelegten Protokolls denkbar. Entscheidend ist hierbei jedesmal, dass die Vergebührungsdaten zeitnah erzeugt und an das Pre-Paid-System übermittelt werden, welches Zugriff auf die Konten der Teilnehmer hat.

Sofern in einer Gruppe nicht alle Teilnehmer über vorausbezahlte Konten verfügen, so ist auch die gleichzeitige Unterstützung von Post-Paid-Teilnehmern möglich. In diesem Fall kann die Übermittlung der vorzugsweise zusätzlich in dem Protokoll gespeicherten vergebührungsrelevanten gruppendienstspezifischen Ereignisdaten an eine entsprechend ausgebildete Gruppen-Gebühren-Verarbeitungseinheit 2 erfolgen, welche sowohl Pre-Paid- als auch Post-Paid-Teilnehmer unterstützt. Hierfür können an die Gruppen-Gebühren-Verarbeitungseinheit 2 unterschiedliche Vergebührungseinheiten 3 angeschlossen werden, z. B. jeweils eine für Pre-Paid- und eine für Post-Paid-Teilnehmer. Falls eine Vergebührungseinheit 3 beide Arten von Teilnehmern unterstützt, so sind unterschiedliche Gruppen-Gebühren-Verarbeitungseinheiten 2 für Pre-Paid- und für Post-Paid-Teilnehmer nicht erforderlich.

Es sei darauf hingewiesen, dass die Gruppenlisten-Erzeugungseinheit 10 und die Gruppen-Gebühren-Verarbeitungseinheit 2 auch als eine gemeinsame Einheit ausgebildet sein können, da es sich wie zuvor bereits ausgeführt bei den dargestellten Einheiten um logische Einheiten handelt. In diesem Fall entfällt die Notwendigkeit die gruppendienstspezifischen Ereignisdaten bzw. jeweils eine Teilmenge derselben von der Ereignis-Erfassungseinheit 1 sowohl an die Gruppenlisten-Erzeugungseinheit 10 als auch an die Gruppen-Gebühren-Verarbeitungseinheit 2 zu übermitteln. Darüber hinaus kann weiterhin auch die Ereignis-Erfassungseinheit 1 zusätzlich in derselben Komponente realisiert sein, so dass die Erfassung und die entsprechende Auswertung der Ereignisdaten durch eine gemeinsame Komponente erfolgt.

## Patentansprüche

1. Verfahren zum Betreiben mehrerer Gruppendienste in einem Kommunikationsnetz mit den folgenden Schritten:
- Erfassen gruppendienstspezifischer und/oder gruppenspezifischer Ereignisdaten in einer Ereignis-Erfassungseinheit (1),
- Übermitteln zumindest einer Teilmenge der gruppendienstspezifischen und/oder gruppenspezifischen Ereignisdaten von der Ereignis-Erfassungseinheit (1) an eine Gruppenlisten-Erzeugungseinheit (10) und
- Auswerten der übermittelten gruppendienstspezifischen und/oder gruppenspezifischen Ereignisdaten und Erzeugen von gruppenspezifischen Listen durch die Gruppenlisten-Erzeugungseinheit (10), wobei
die gruppenspezifischen Listen für jeden der Gruppendienste den aktuellen Teilnahmezustand der Teilnehmer der Gruppe angeben und wobei
die Gruppenlisten-Erzeugungseinheit (10) eine gruppendienstübergreifende Einheit darstellt, so dass der
Teilnahmezustand für alle Gruppendienste an einer zentralen Stelle ermittelt wird und die Informationen, welche Teilnehmer aktuell an den Gruppendiensten beteiligt sind, von der Gruppenlisten-Erzeugungseinheit (10) für verschiedene Anwendungen und Nutzern auf einheitliche Weise zur Verfügung gestellt werden.

2. Verfahren nach Anspruch 1,
**gekennzeichnet durch**
Speichern der gruppenspezifischen Listen in der Gruppenlisten-Erzeugungseinheit (10).

3. Verfahren nach Anspruch 1 oder 2,
**dadurch gekennzeichnet, dass** die gruppendienstspezifischen und/oder gruppenspezifischen Ereignisdaten von der Ereignis-Erfassungseinheit (1) protokolliert werden und zumindest die Teilmenge der gruppendienstspezifischen und/oder gruppenspezifischen Ereignisdaten von der Ereignis-Erfassungseinheit (1) an die Gruppenlisten-Erzeugungseinheit (10) übermittelt wird.

4. Verfahren nach einem der Ansprüche 1 bis 3,
**dadurch gekennzeichnet, dass** zumindest die Teilmenge der gruppendienstspezifischen und/oder gruppenspezifischen Ereignisdaten jeweils unmittelbar nach ihrer Erfassung von der Ereignis-Erfassungseinheit (1) an die Gruppenlisten-Erzeugungseinheit (10) übermittelt wird.

5. Verfahren nach einem der vorhergehenden Ansprüche,
**dadurch gekennzeichnet, dass** das Auswerten der gruppendienstspezifischen und/oder gruppenspezifischen Ereignisdaten und das Erzeugen der gruppenspezifischen Listen durch die Gruppenlisten-Erzeugungseinheit (10) jeweils unmittelbar nach Empfang zumindest der Teilmenge der gruppendienstspezifischen und/oder gruppenspezifischen Ereignisdaten erfolgt.

6. Verfahren nach einem der Ansprüche 1 bis 4,
**dadurch gekennzeichnet, dass** das Auswerten der gruppendienstspezifischen und/oder gruppenspezifischen Ereignisdaten und das Erzeugen der gruppenspezifischen Listen durch die Gruppenlisten-Erzeugungseinheit (10) nach Empfang einer Aufforderung zur Übermittlung einer Liste der für den jeweiligen Gruppendienst bzw. die Gruppendienste einer Gruppe aktiven Teilnehmer erfolgt.

7. Verfahren nach einem der vorhergehenden Ansprüche, **gekennzeichnet durch**
- zusätzliches Übermitteln zumindest vergebührungsrelevanter gruppendienstspezifischer und/oder vergebührungsrelevanter gruppenspezifischer Ereignisdaten von der Ereignis-Erfassungseinheit (1) an eine Gruppen-Gebühren-Verarbeitungseinheit (2) und
- Auswerten der vergebührungsrelevanten gruppendienstspezifischen und/oder der vergebührungsrelevanten gruppenspezifischen Ereignisdaten und Erzeugen von nutzungsabhängigen und teilnehmerspezifischen Vergebührungsdaten **durch** die Gruppen-Gebühren-Verarbeitungseinheit (2).

8. Verfahren nach Anspruch 7,
**dadurch gekennzeichnet, dass** zumindest die vergebührungsrelevanten gruppendienstspezifischen und/oder zumindest die vergebührungsrelevanten gruppenspezifischen Ereignisdaten jeweils unmittelbar nach ihrer Erfassung von der Ereignis-Erfassungseinheit (1) an die Gruppen-Gebühren-Verarbeitungseinheit (2) übermittelt werden.

9. Verfahren nach Anspruch 7 oder 8,
**dadurch gekennzeichnet, dass** die Vergebührungsdaten zur teilnehmerspezifischen Nachverarbeitung von der Gruppen-Gebühren-Verarbeitungseinheit (2) an zumindest eine Vergebührungseinheit (3) übermittelt werden.

10. Verfahren nach einem der vorhergehenden Ansprüche,
**dadurch gekennzeichnet, dass** als Ereignis-Erfassungseinheit (1) ein Gruppenverwaltungs-Server (4) verwendet wird, auf dem die für die Einrichtung und Verwaltung der Gruppe des Gruppendienstes relevanten Daten gespeichert sind.

11. Verfahren nach einem der Ansprüche 1 bis 9,
**dadurch gekennzeichnet, dass** als Ereignis-Erfassungseinheit (1) ein Gruppendienst-Server. (5) verwendet wird, der den Gruppendienst mittels des Kommunikationsnetzes für die Gruppe zur Verfügung stellt.

12. Verfahren nach einem der vorhergehenden Ansprüche,
**dadurch gekennzeichnet, dass** als Kommunikationsnetz ein Mobilfunknetz verwendet wird.

13. Verfahren nach einem der vorhergehenden Ansprüche,
**dadurch gekennzeichnet, dass** der Gruppendienst über die Grenze des Kommunikationsnetzes hinweg betrieben wird.

14. Anordnung zum Betreiben mehrerer Gruppendienste in einem Kommunikationsnetz mit
- einer Ereignis-Erfassungseinheit (1) zur Erfassung gruppendienstspezifischer und/oder gruppenspezifischer Ereignisdaten und
- einer mit der Ereignis-Erfassungseinheit (1) verbundenen Gruppenlisten-Erzeugungseinheit (10) mit
- Empfangsmitteln (11) zum Empfangen zumindest einer Teilmenge der gruppendienstspezifischen und/oder gruppenspezifischen Ereignisdaten von der Ereignis-Erfassungseinheit (1),
- Analysemitteln (12) zum Auswerten der empfangenen gruppendienstspezifischen und/oder gruppenspezifischen Ereignisdaten und
- Gruppenlistenerzeugungsmitteln (13) zum Erzeugen von gruppenspezifischen Listen, wobei die Listen für jeden der Gruppendienste den aktuellen Teilnahmezustand der Teilnehmer der Gruppe angeben,
wobei die Gruppenlisten-Erzeugungseinheit (10) eine gruppendienstübergreifende Einheit darstellt, so dass der
Teilnahmezustand für alle Gruppendienste an einer zentralen Stelle ermittelbar ist und die Informationen, welche Teilnehmer aktuell an den Gruppendiensten beteiligt sind, von der Gruppenlisten-Erzeugungseinheit (10) für verschiedene Anwendungen und Nutzern auf einheitliche Weise zur Verfügung gestellt werden können.

15. Anordnung nach Anspruch 14,
**gekennzeichnet durch** der Gruppenlisten-Erzeugungseinheit (10) zugeordnete Speichermittel (14) zum Speichern der gruppenspezifischen Listen.

16. Anordnung nach Anspruch 14 oder 15,
**dadurch gekennzeichnet, dass** die Ereignis-Erfassungseinheit (1) zur Übermittlung zumindest der Teilmenge der gruppendienstspezifischen und/oder gruppenspezifischen Ereignisdaten jeweils unmittelbar nach ihrer Erfassung an die Gruppenlisten-Erzeugungseinheit (10) ausgebildet ist.

17. Anordnung nach einem der Ansprüche 14 bis 16,
**dadurch gekennzeichnet, dass**
- die Analysemittel (12) zum Auswerten der gruppendienstspezifischen und/oder gruppenspezifischen Ereignisdaten und
- die Gruppenlistenerzeugungsmittel (13) zum Erzeugen der gruppenspezifischen Listen jeweils unmittelbar nach Empfang zumindest der Teilmenge der gruppendienstspezifischen und/oder gruppenspezifischen Ereignisdaten ausgebildet sind.

18. Anordnung nach einem der Ansprüche 14 bis 16,
**dadurch gekennzeichnet, dass**
- die Analysemittel (12) zum Auswerten der gruppendienstspezifischen und/oder gruppenspezifischen Ereignisdaten und
- die Gruppenlistenerzeugungsmittel (13) zum Erzeugen der gruppenspezifischen Listen nach Empfang einer Aufforderung zur Übermittlung einer Liste der für den jeweiligen Gruppendienst aktiven Teilnehmer ausgebildet sind.

19. Anordnung nach einem der Ansprüche 14 bis 18
**dadurch gekennzeichnet, dass**
- der Ereignis-Erfassungseinheit (1) zusätzlich zum Übermitteln zumindest vergebührungsrelevanter gruppendienstspezifischer und/oder zumindest vergebührungsrelevanter gruppenspezifischer Ereignisdaten an eine Gruppen-Gebühren-Verarbeitungseinheit (2) und
- die Gruppen-Gebühren-Verarbeitungseinheit (2) zum Auswerten zumindest der vergebührungsrelevanten gruppendienstspezifischen und/oder zumindest der vergebührungsrelevanten gruppenspezifischen Ereignisdaten und zum Erzeugen von nutzungsabhängigen und teilnehmerspezifischen Vergebührungsdaten ausgebildet sind.

20. Anordnung nach Anspruch 19,
**dadurch gekennzeichnet, dass** die Ereignis-Erfassungseinheit (1) zum Übermitteln zumindest der vergebührungsrelevanten gruppendienstspezifischen und/oder zumindest der vergebührungsrelevanten gruppenspezifischen Ereignisdaten jeweils unmittelbar nach ihrer Erfassung an die Gruppen-Gebühren-Verarbeitungseinheit (2) ausgebildet ist.

21. Anordnung nach einem der Ansprüche 19 oder 20,
**dadurch gekennzeichnet, dass** mit der Gruppen-Gebühren-Verarbeitungseinheit (2) eine Vergebührungseinheit (3) verbunden ist zum Empfangen der Vergebührungsdaten und zu deren teilnehmerspezifischen Nachverarbeitung.

22. Anordnung nach einem der Ansprüche 14 bis 21,
**dadurch gekennzeichnet, dass** die Ereignis-Erfassungseinheit (1) ein Gruppenverwaltungs-Server (4) ist, auf dem die für die Einrichtung und Verwaltung der Gruppe des Gruppendienstes relevanten Daten gespeichert sind.

23. Anordnung nach einem der Ansprüche 14 bis 21,
**dadurch gekennzeichnet, dass** die Ereignis-Erfassungseinheit (1) ein Gruppendienst-Server (5) ist, der den Gruppendienst mittels des Kommunikationsnetzes für die Gruppe zur Verfügung stellt.

24. Anordnung nach einem der Ansprüche 14 bis 23,
**dadurch gekennzeichnet, dass** das Kommunikationsnetz ein Mobilfunknetz ist.

## Claims

1. Method for operating a plurality of group services in a communication network, having the following steps:
- group-service-specific and/or group-specific event data are captured in an event detection unit (1),
- at least one subset of the group-service-specific and/or group-specific event data is transmitted from the event detection unit (1) to a group list generation unit (10), and
- the transmitted group-service-specific and/or group-specific event data are evaluated and group-specific lists are generated by the group list generation unit (10), the group-specific lists indicating the current participation state of the participants in the group for each of the group services, and the group list generation unit (10) being a multi-group-service unit, so that the participation state is ascertained for all group services at a central location and the information regarding which participants are currently involved in the group services is made available to different applications and users in a standard manner by the group list generation unit (10).

2. Method according to Claim 1,
**characterized by**
the group-specific lists being stored in the group list generation unit (10).

3. Method according to Claim 1 or 2,
**characterized in that**
the group-service-specific and/or group-specific event data are logged by the event detection unit (1) and at least the subset of the group-service-specific and/or group-specific event data is transmitted from the event detection unit (1) to the group list generation unit (10).

4. Method according to one of Claims 1 to 3,
**characterized in that**
at least the subset of the group-service-specific and/or group-specific event data is transmitted from the event detection unit (1) to the group list generation unit (10) in each case directly after it has been captured.

5. Method according to one of the preceding claims,
**characterized in that**
the evaluation of the group-service-specific and/or group-specific event data and the generation of the group-specific lists by the group list generation unit (10) take place in each case directly after at least the subset of the group-service-specific and/or group-specific event data has been received.

6. Method according to one of Claims 1 to 4,
**characterized in that**
the evaluation of the group-service-specific and/or group-specific event data and the generation of the group-specific lists by the group list generation unit (10) take place after a request for transmission of a list of the participants who are active for the respective group service or the group services of a group has been received.

7. Method according to one of the preceding claims,
**characterized by**
- at least charging-related group-service-specific and/or charging-related group-specific event data being additionally transmitted from the event detection unit (1) to a group charge processing unit (2) and
- the charging-related group-service-specific and/or the charging-related group-specific event data being evaluated and use-dependent and participant-specific charging data being generated by the group charge processing unit (2).

8. Method according to Claim 7,
**characterized in that**
at least the charging-related group-service-specific and/or at least the charging-related group-specific event data are transmitted from the event detection unit (1) to the group charge processing unit (2) in each case directly after they have been captured.

9. Method according to Claim 7 or 8,
**characterized in that**
the charging data are transmitted from the group charge processing unit (2) to at least one charging unit (3) for the purpose of participant-specific postprocessing.

10. Method according to one of the preceding claims,
**characterized in that**
the event detection unit (1) used is a group management server (4) on which the data relevant for setting up and managing the group of the group service are stored.

11. Method according to one of Claims 1 to 9,
**characterized in that**
the event detection unit (1) used is a group service server (5) which provides the group service for the group using the communication network.

12. Method according to one of the preceding claims,
**characterized in that**
the communication network used is a mobile radio network.

13. Method according to one of the preceding claims,
**characterized in that**
the group service is operated across the boundary of the communication network.

14. Arrangement for operating a plurality of group services in a communication network, with
- an event detection unit (1) for the capture of group-service-specific and/or group-specific event data and
- a group list generation unit (10), connected to the event detection unit (1), with
- reception means (11) for receiving at least one subset of the group-service-specific and/or group-specific event data from the event detection unit (1),
- analysis means (12) for evaluating the received group-service-specific and/or group-specific event data, and
- group list generation means (13) for generating group-specific lists, the lists indicating the current participation state of the participants in the group for each of the group services,
wherein the group list generation unit (10) is a multi-group-service unit, so that the participation state can be ascertained for all group services at a central location and the information regarding which participants are currently involved in the group services can be made available to different applications and users in a standard manner by the group list generation unit (10).

15. Arrangement according to Claim 14,
**characterized by**
memory means (14) associated with the group list generation unit (10) for storing the group-specific lists.

16. Arrangement according to Claim 14 or 15,
**characterized in that**
the event detection unit (1) is designed to transmit at least the subset of the group-service-specific and/or group-specific event data to the group list generation unit (10) in each case directly after it has been captured.

17. Arrangement according to one of Claims 14 to 16,
**characterized in that**
- the analysis means (12) are designed to evaluate the group-service-specific and/or group-specific event data, and
- the group list generation means (13) are designed to generate the group-specific lists in each case directly after at least the subset of the group-service-specific and/or group-specific event data has been received.

18. Arrangement according to one of Claims 14 to 16,
**characterized in that**
- the analysis means (12) are designed to evaluate the group-service-specific and/or group-specific event data, and
- the group list generation means (13) are designed to generate the group-specific lists after a request for transmission of a list of the participants who are active for the respective group service has been received.

19. Arrangement according to one of Claims 14 to 18,
**characterized in that**
- the event detection unit (1) is additionally designed to transmit at least charging-related group-service-specific and/or at least charging-related group-specific event data to a group charge processing unit (2), and
- the group charge processing unit (2) is designed to evaluate at least the charging-related group-service-specific and/or at least the charging-related group-specific event data and to generate use-dependent and participant-specific charging data.

20. Arrangement according to Claim 19,
**characterized in that**
the event detection unit (1) is designed to transmit at least the charging-related group-service-specific and/or at least the charging-related group-specific event data to the group charge processing unit (2) in each case directly after they have been captured.

21. Arrangement according to one of Claims 19 and 20,
**characterized in that**
the group charge processing unit (2) has a charging unit (3) connected to it for receiving the charging data and for postprocessing them on a participant-specific basis.

22. Arrangement according to one of Claims 14 to 21,
**characterized in that**
the event detection unit (1) is a group management server (4) on which the data relevant for setting up and managing the group of the group service are stored.

23. Arrangement according to one of Claims 14 to 21,
**characterized in that**
the event detection unit (1) is a group service server (5) which provides the group service for the group using the communication network.

24. Arrangement according to one of Claims 14 to 23,
**characterized in that**
the communication network is a mobile radio network.

## Revendications

1. Procédé pour exploiter plusieurs services de groupe dans un réseau de communication, comportant les étapes suivantes :
- détection de données d'événements spécifiques à des services de groupe et/ou spécifiques au groupe dans une unité de détection d'événements (1),
- transmission d'au moins un sous-ensemble des données d'événements spécifiques aux services de groupe et/ou spécifiques au groupe, de l'unité de détection d'événements (1) à une unité de production de listes de groupes (10) et
- évaluation des données d'événements transmises spécifiques aux services de groupe et/ou spécifiques au groupe et production de listes spécifiques au groupe par l'unité de production de listes de groupes (10),
les listes spécifiques au groupe indiquant, pour chacun des services de groupe, l'état de participation actuel des usagers du groupe et
l'unité de production de listes de groupes (10) constituant une unité inter-services de groupe de sorte que, pour tous les services de groupe, l'état de participation est déterminé à un point central et que les informations indiquant quels usagers participent actuellement aux services de groupe sont mises à disposition de manière uniforme par l'unité de production de listes de groupes (10) pour différentes applications et différents utilisateurs.

2. Procédé selon la revendication 1, **caractérisé par** le stockage des listes spécifiques au groupe dans l'unité de production de listes de groupes (10).

3. Procédé selon la revendication 1 ou 2, **caractérisé en ce que** les données d'événements spécifiques aux services de groupe et/ou spécifiques au groupe sont consignées par l'unité de détection d'événements (1) et au moins le sous-ensemble des données d'événements spécifiques aux services de groupe et/ou spécifiques au groupe sont transmises de l'unité de détection d'événements (1) à l'unité de production de listes de groupes (10).

4. Procédé selon l'une des revendications 1 à 3, **caractérisé en ce qu'**au moins le sous-ensemble des données d'événements spécifiques aux services de groupe et/ou spécifiques au groupe est respectivement transmis, directement après sa détection, de l'unité de détection d'événements (1) à l'unité de production de listes de groupes (10).

5. Procédé selon l'une des revendications précédentes, **caractérisé en ce que** l'évaluation des données d'événements spécifiques aux services de groupe et/ou spécifiques au groupe et la production des listes spécifiques aux groupes par l'unité de production de listes de groupes (10) ont lieu respectivement directement après la réception d'au moins le sous-ensemble des données d'événements spécifiques aux services de groupe et/ou spécifiques au groupe.

6. Procédé selon l'une des revendications 1 à 4, **caractérisé en ce que** l'évaluation des données d'événements spécifiques aux services de groupe et/ou spécifiques au groupe et la production des listes spécifiques au groupe par l'unité de production de listes de groupes (10) ont lieu après la réception d'une invitation à transmettre une liste des usagers actifs pour chaque service de groupe resp. les services de groupe d'un groupe.

7. Procédé selon l'une des revendications précédentes, **caractérisé par**
- la transmission additionnelle d'au moins des données d'événements spécifiques aux services de groupe et pertinentes pour la facturation et/ou spécifiques au groupe et pertinentes pour la facturation, de l'unité de détection d'événements (1) à une unité de traitement de frais de groupe (2) et
- l'évaluation des données d'événements spécifiques aux services de groupe et pertinentes pour la facturation et/ou spécifiques au groupe et pertinentes pour la facturation et la production de données de facturation dépendantes de l'utilisation et spécifiques aux usagers par l'unité de traitement de frais de groupe (2).

8. Procédé selon la revendication 7, **caractérisé en ce qu'**au moins les données d'événements spécifiques aux services de groupe et pertinentes pour la facturation et/ou au moins les données d'événements spécifiques au groupe et pertinentes pour la facturation sont respectivement transmises, directement après leur détection, de l'unité de détection d'événements (1) à une unité de traitement de frais de groupe (2).

9. Procédé selon la revendication 7 ou 8, **caractérisé en ce que** les données de facturation sont transmises, pour le post-traitement spécifique aux usagers, de l'unité de traitement de frais de groupe (2) à au moins une unité de facturation (3).

10. Procédé selon l'une des revendications précédentes, **caractérisé en ce qu'**est utilisé, en tant qu'unité de détection d'événements (1), un serveur de gestion de groupe (4) sur lequel sont stockées les données pertinentes pour l'aménagement et la gestion du groupe du service de groupe.

11. Procédé selon l'une des revendications 1 à 9, **caractérisé en ce qu'**est utilisé, en tant qu'unité de détection d'événements (1), un serveur de service de groupe (5) qui met le service de groupe à la disposition du groupe au moyen du réseau de communication.

12. Procédé selon l'une des revendications précédentes, **caractérisé en ce qu'**un réseau radio mobile est utilisé en tant que réseau de communication.

13. Procédé selon l'une des revendications précédentes, **caractérisé en ce que** le service de groupe est exploité au-delà de la limite du réseau de communication.

14. Dispositif pour exploiter plusieurs services de groupe dans un réseau de communication, avec
- une unité de détection d'événements (1) pour détecter des données d'événements spécifiques aux services de groupe et/ou spécifiques au groupe et
- une unité de production de listes de groupes (10) reliée à l'unité de détection d'événements (1) avec
- des moyens de réception (11) pour recevoir de l'unité de détection d'événements (1) au moins un sous-ensemble des données d'événements spécifiques aux services de groupe et/ou spécifiques au groupe,
- des moyens d'analyse (12) pour évaluer les données d'événements reçues spécifiques aux services de groupe et/ou spécifiques au groupe et
- des moyens pour produire des listes de groupes (13) pour produire des listes spécifiques au groupe, les listes indiquant, pour chacun des services de groupe, l'état de participation actuel des usagers du groupe,
l'unité de production de listes de groupes (10) constituant une unité inter-services de groupe de sorte que, pour tous les services de groupe, l'état de participation peut être déterminé à un point central et que les informations indiquant quels usagers participent actuellement aux services de groupe peuvent être mises à disposition de manière uniforme par l'unité de production de listes de groupes (10) pour différentes applications et différents utilisateurs.

15. Dispositif selon la revendication 14, **caractérisé par** des moyens de stockage (14) associés à l'unité de production de listes de groupes (10) pour stocker les listes spécifiques au groupe.

16. Dispositif selon la revendication 14 ou 15, **caractérisé en ce que** l'unité de détection d'événements (1) est conçue pour transmettre à l'unité de production de listes de groupes (10) au moins le sous-ensemble des données d'événements spécifiques aux services de groupe et/ou spécifiques au groupe respectivement directement après sa détection.

17. Dispositif selon l'une des revendications 14 à 16, **caractérisé en ce que**
- les moyens d'analyse (12) sont conçus pour évaluer les données d'événements spécifiques aux services de groupe et/ou spécifiques au groupe et
- les moyens de production de listes de groupes (13) sont conçus pour produire les listes spécifiques au groupe respectivement directement après la réception au moins du sous-ensemble des données d'événements spécifiques aux services de groupe et/ou spécifiques au groupe.

18. Dispositif selon l'une des revendications 14 à 16, **caractérisé en ce que**
- les moyens d'analyse (12) sont conçus pour évaluer les données d'événements spécifiques aux services de groupe et/ou spécifiques au groupe et
- les moyens de production de listes de groupes (13) sont conçus pour produire les listes spécifiques au groupe après la réception d'une invitation à transmettre une liste des usagers actifs pour le service de groupe respectif.

19. Dispositif selon l'une des revendications 14 à 18, **caractérisé en ce que**
- l'unité de détection d'événements (1) est additionnellement conçue pour transmettre à une unité de traitement de frais de groupe (2) au moins des données d'événements spécifiques aux services de groupe et pertinentes pour la facturation et/ou au moins des données d'événements spécifiques au groupe et pertinentes pour la facturation et
- l'unité de traitement de frais de groupe (2) est conçue pour évaluer au moins les données d'événements spécifiques aux services de groupe et pertinentes pour la facturation et/ou au moins les données d'événements spécifiques au groupe et pertinentes pour la facturation et pour générer des données de facturation dépendantes de l'utilisation et spécifiques aux usagers.

20. Dispositif selon la revendication 19, **caractérisé en ce que** l'unité de détection d'événements (1) est conçue pour transmettre à l'unité de traitement de frais de groupe (2) au moins les données d'événements spécifiques aux services de groupe et pertinentes pour la facturation et/ou au moins les données d'événements spécifiques au groupe et pertinentes pour la facturation respectivement directement après leur détection.

21. Dispositif selon l'une des revendications 19 ou 20, **caractérisé en ce qu'**une unité de facturation (3) est reliée à l'unité de traitement de frais de groupe (2) pour recevoir les données de facturation et pour le post-traitement de celles-ci spécifique à l'usager.

22. Dispositif selon l'une des revendications 14 à 21, **caractérisé en ce que** l'unité de détection d'événements (1) est un serveur de gestion de groupes (4) sur lequel sont stockées les données pertinentes pour l'aménagement et la gestion du groupe du service de groupe.

23. Dispositif selon l'une des revendications 14 à 21, **caractérisé en ce que** l'unité de détection d'événements (1) est un serveur de services de groupe (5) qui met le service de groupe à la disposition du groupe au moyen du réseau de communication.

24. Dispositif selon l'une des revendications 14 à 23, **caractérisé en ce que** le réseau de communication est un réseau radio mobile.
